# EUROPÄISCHE PATENTSCHRIFT

(11) **EP 1 611 751 B1**
(45) Veröffentlichungstag und Bekanntmachung des Hinweises auf die Patenterteilung: **24.01.2007**
(21) Anmeldenummer: 03727199.6
(22) Anmeldetag: 04.04.2003
(51) Int. Cl.: H04Q 3/00, H04L 12/28, H04L 12/14

(54) **VERFAHREN ZUR KONTROLLE UND STEUERUNG MEHRERER ZUR VERFÜGUNG STEHENDER DEZENTRALER IP-BUDGETS EINES TEILNEHMERS IN EINEM PAKET-BASIERTEN KOMMUNIKATIONSNETZ BEI EINER ONLINE-VERGEBÜHRUNG MIT GRENZWERTÜBERWACHUNG VON DATENÜBERTRAGUNGEN**
METHOD FOR MONITORING AND CONTROLLING A NUMBER OF AVAILABLE DECENTRALIZED IP BUDGETS OF A SUBSCRIBER IN A PACKET-BASED COMMUNICATIONS NETWORK DURING AN ONLINE ASSESSMENT OF CHARGES WITH LIMIT VALUE MONITORING FOR DATA TRANSMISSIONS
PROCEDE DE CONTROLE ET DE COMMANDE DE PLUSIEURS BUDGETS IP DECENTRALISES ET DISPONIBLES D'UN ABONNE A UN RESEAU DE COMMUNICATION ORIENTE PAQUETS LORS D'UNE TAXATION EN LIGNE AVEC SURVEILLANCE DE VALEURS LIMITES DE TRANSMISSIONS DE DONNEES

(43) Veröffentlichungstag der Anmeldung: 04.01.2006
(73) Patentinhaber: SIEMENS AKTIENGESELLSCHAFT, 80333 München (DE)
(72) Erfinder: FÖLL, Uwe, 14612 Falkensee (DE); HAHN, Wolfgang, 16562 Bergfelde (DE)
(86) Internationale Anmeldenummer: PCT/DE2003/001226
(87) Internationale Veröffentlichungsnummer: WO 2004/093472

(56) Entgegenhaltungen:
- EP-A- 0 971 510
- WO-A-02/096025
- WO-A-03/025870
- US-A- 5 995 822

## Beschreibung

Die WO02/096025A offenbart ein paket-basiertes Kommunikationsnetz in dem Mehrwertdienste implementiert sind und vergebührt werden.
US-A-995 822 offenbart ein leitungsbasiertes Kommunikationsnetz in dem mehrere separate circuit- switched-Telefonverbindungen eines Teilnehmers online vergebührt werden können.

Die vorliegende Erfindung betrifft ein Verfahren zur Kontrolle und Steuerung mehrerer zur Verfügung stehender dezentraler IP-Budgets, wie beispielsweise Zeit, Übertragungsvolumen, Paketanzahl, eines Teilnehmers in einem paket-basierten Kommunikationsnetz bei einer Online-Vergebührung mit Grenzwertüberwachung von Datenübertragungen. In drahtlosen und drahtgebundenen Kommunikationsnetzen werden häufig Kommunikationsverfahren verwendet, welche auf der Übertragung von Datenpaketen (z.B. IP-Paketen, IP=Internet Protokoll) beruhen. Man spricht dabei dann von paket-basierten Kommunikationsnetzen. Bei einem paket-basierten Kommunikationsnetz kann es sich beispielsweise um ein Mobilfunknetz der dritten Generation handeln, welches nach GPRS-Vorgaben arbeitet (GPRS=General Packet Radio System). In paketbasierten Mobilfunknetzen basiert eine Gebührenerfassung unter anderem auf einer Erfassung der übertragenen IP-Pakete. Die Gebühren berechnen sich dabei aus dem Gesamtvolumen der von und zu einem Nutzer übertragenen IP-Pakete, deren Anzahl oder der Anzahl der Datenbytes. Ebenso können die Gebühren aufgrund der übertragungszeit bestimmt werden. Dieser Ressourcenverbrauch wird im Rahmen der vorliegenden Erfindung als IP-Budget bezeichnet. Existierende Online Gebühren-Dienste für GPRS basieren auf einer Überwachung des IP-Budgets innerhalb eines PDP-Kontextes. Ein PDP-Kontext ist ein Beispiel einer sogenannten Layer2-Verbindung eines Teilnehmers zu dem Kommunikationsnetz. Alle gebührenrelevante Daten, welche einen Kontext betreffen, wer den erfasst und mit einem durch einen Gebührenrechner, einem sogenannten Online Charging-Server, für diesen Kontext vorgegebenen IP-Budget verglichen. Das durch den Gebührenrechner für einen Datenstrom zur Verfügung gestellte Budget wird durch aktuelle Parameter, wie beispielsweise ein Guthaben des Teilnehmers, eine zur Verfügung gestellte Bandbreite oder durch eine Qualitätsanforderung (QoS) eines Datenstrom bestimmt. Dabei können sich mehrere Datenströme innerhalb eines Layer 2/PDP-Kontextes befinden. Ein konkret zur Verfügung gestelltes Budget ist immer an die Parameter eines Datenstromes gebunden. Stellt ein Budget beispielsweise 300kB zur Verfügung, so kann dieses Budget nur für einen Datenstrom mit den vorgegebenen Bandbreiten oder Qualitätsanforderungen verwendet werden. Wird das Budget beispielsweise konkret für einen sogenannten "Best Effort" Datenstrom zur Verfügung gestellt, so kann dieses Budget nicht in der gleichen Höhe für einen anderen, beispielsweise einen sogenannten "realtime" Datenstrom genutzt werden. Es stellt sich somit die Notwendigkeit einer differenzierten Erfassung von Übertragungsdaten, wobei die einzelnen Datenströme innerhalb eines Layer 2/PDP-Kontextes unterschieden werden. Einzelne Datenströme realisieren dabei Transaktionen einer Anwendung zwischen zwei oder mehreren IP Endpunkten. In GPRS wird dazu eine Steuerfunktion, eine sogenannte IP-Flow Funktion definiert. Bei diesem Konzept stellt sich nun das Problem der Zuordnung von Budgets auf die einzelnen Datenströme. Ferner stellt sich die Frage nach einer Verfahrensweise im Falle des Erreichens der Budgetgrenze, das heißt, wenn der Gebührenrechner bzw. der Online Charging-Server auf Nachfrage kein weiteres Budget mehr zur Verfügung stellen kann. Bisher wurde der gesamte PDP-Kontext durch einen Steuernetzknoten des GPRS-Netzes, einen sogenannten SGSN überwacht und im Falle des Erreichens der Budgetgrenze wurde die Verbindung getrennt.

Bei Realisierung der genannten IP Flow Funktion würden die Budgets direkt den einzelnen Datenströmen zugeordnet werden und im Falle des Erreichens der Budgetgrenze würde der entsprechende Datenstrom unterbrochen, wobei die verbleibenden Datenströme weiter bestehen bleiben würden.

Dieses Konzept ist allerdings sehr starr in Bezug auf die Budgetverteilung und erlaubt keine Flexibilität bei Erreichen der Budgetgrenze in Bezug auf einen konkreten Datenstrom.

Eine Aufgabe der vorliegenden Erfindung war es nunmehr, ein Verfahren bereitzustellen, mit dessen Hilfe es möglich wird, flexibel und gleichzeitig kontrolliert ein für einen Teilnehmer zur Verfügung stehendes Budget auf die einzelnen Datenströme zu verteilen.

Gelöst wird diese Aufgabe durch ein erfindungsgemäßes Verfahren gemäß Anspruch 1. Weitere vorteilhafte Ausführungsformen sind in den Unteransprüchen aufgeführt.

Gemäß Anspruch 1 wird ein Verfahren zur Kontrolle und Steuerung mehrerer zur Verfügung stehender dezentraler IP-Budgets eines Teilnehmers in einem paket-basierten Kommunikationsnetz bei einer Online-Vergebührung mit Grenzwertüberwachung von Datenübertragungen bereitgestellt, bei dem die mehreren zur Verfügung stehenden IP-Budgets datenstromspezifisch jeweils einem Datenstrom in einem dem Teilnehmer zuordenbaren Kontext zugeteilt werden und eine Steuerfunktion in einem Netzknoten des Kommunikationsnetzes vorgesehen wird, die nach Vergebührungsvorgaben von einem Gebührenrechner bei einer Ressourcennutzung eines Datenstroms in einem dem Teilnehmer zuordenbaren Kontext das datenstromspezifische IP-Budget gemäß der Ressourcennutzung des Datenstroms belastet und fallbezogen eine teilweise oder vollständige Übertragung der IP-Budgets zwischen ausgewählten Datenströmen bewirkt.

In einer bevorzugten Ausführungsform des erfindungsgemäßen Verfahrens wird als paket-basiertes Kommunikationsnetz ein GPRS-Netz verwendet. Die Steuerfunktion ist vorzugsweise dabei in einem GGSN des GPRS-Netzes lokalisiert. Im Beispiel von GPRS befinden sich, wie eingangs bereits erwähnt, mehrere Datenströme in einem PDP-Kontext. Wie bereits erläutert stellt ein PDP-Kontext ein Beispiel einer sogenannten Layer2-Verbindung eines Teilnehmers zu dem Kommunikationsnetz dar. Analoge Layer2-Verbindungen gibt es auch in einem drahtlosen lokalen Kommunikationsnetz, einem sogenannten WLAN (Wireless Local Area Network). Das erfindungsgemäße Verfahren ist für beliebige IP-Flows/Datenströme anwendbar.

In einer besonders bevorzugten Ausführungsform des erfindungsgemäßen Verfahrens wird zunächst in einem ersten Schritt einem ersten Datenstrom ein datenstromspezifisches festes IP-Budgets zugeordnet. In einem zweiten Schritt wird ein Teil oder die Gesamtheit des datenstromspezifischen festen IP-Budgets des ersten Datenstroms durch die Steuereinheit auf einen zweiten Datenstrom übertragen, wenn seitens des Gebührenrechners im Rahmen der Vergebührungsvorgaben eine entsprechende Übertragungsbefugnis und -information gegeben wird. Das bedeutet, dass der Gebührenrechner der Steuerfunktion eine Befugnis dafür erteilen kann, das einem ersten Datenstrom "Flow 1" zugeordnete IP-Budget auf einen zweiten Datenstrom "Flow 2" zu übertragen. Jeder Datenstrom besitzt eine eigene Kontrolleinheit zur Kontrolle und Überwachung des datenstromspezifischen IP-Budgets. Mittels der Kontrolleinheit kann jederzeit für den jeweiligen Datenstrom das aktuell noch zur Verfügung stehende IP-Budget ermittelt werden. Zur Übertragung von einem Teil oder der Gesamtheit eines datenstromspezifischen IP-Budgets von einem Datenstrom auf einen anderen Datenstrom agiert die Steuerfunktion in Zusammenwirkung mit den Kontrolleinheiten, um Kenntnis über den jeweiligen aktuellen Stand der IP-Budgets der jeweiligen Datenströme zu erhalten.

In einer besonders bevorzugten Ausführungsform des erfindungsgemäßen Verfahrens wird ein Teil oder die Gesamtheit des datenstromspezifischen IP-Budgets des ersten Datenstroms durch die Steuereinheit nur dann auf einen zweiten Datenstrom übertragen, wenn ein dem zweiten Datenstrom zugeordnetes datenstromspezifisches IP-Budget vollständig verbraucht ist.

In einer weiteren besonders bevorzugten Ausführungsform des erfindungsgemäßen Verfahrens wird ein Teil oder die Gesamtheit des datenstromspezifischen IP-Budgets des ersten Datenstroms durch die Steuereinheit nur dann auf einen zweiten Datenstrom übertragen wird, wenn der zweite Datenstrom zu einem Kontext gehört, der einer IP-Adresse desselben Teilnehmers zuordenbar ist.

Vorzugsweise wird dabei ein Teil oder die Gesamtheit des datenstromspezifischen IP-Budgets des ersten Datenstroms durch die Steuereinheit nur dann auf einen zweiten Datenstrom übertragen, wenn der zweite Datenstrom zu einem Kontext gehört, der derselben IP-Adresse des Teilnehmers zuordenbar ist.

Besonders bevorzugt wird ein Teil oder die Gesamtheit des datenstromspezifischen IP-Budgets des ersten Datenstroms durch die Steuereinheit dabei nur dann auf einen zweiten Datenstrom übertragen, wenn der zweite Datenstrom zu demselben Kontext gehört wie der erste Datenstrom. Im Falle von GPRS handelt es sich dabei dann um eine Layer 2-Verbindung oder einen PDP-Kontext.

In einer weiteren bevorzugten Ausführungsform des erfindungsgemäßen Verfahrens gibt der Gebührenrechner im Rahmen der Vergebührungsvorgaben eine Übertragungsbefugnis durch Markierung des ersten und des zweiten Datenstroms mit einem gemeinsamen Identifier. Das bedeutet, dass der Gebührenrechner die Datenströme mit einem gemeinsamen Identifier markiert, zwischen denen ein Teil oder die Gesamtheit des IP-Budgets ausgetauscht werden können. Eine Übertragung eines Teils oder der Gesamtheit der jeweiligen IP-Budgets erfolgt dabei ohne jegliche Gewichtung. Das bedeutet, dass die Datenströme auf die gleiche Art und Weise vergebührt werden, ohne dass einer teuerer bzw. billiger als der andere ist.

Häufig tritt auch der Fall auf, dass verschiedene Datenströme unterschiedlich vergebührt werden sollen. Demnach muss bei einer Übertragung eines Teils oder der Gesamtheit des IP-Budgets von einem Datenstrom auf einen anderen Datenstrom, der unterschiedlich zu ersterem vergebührt wird, eine Gewichtung des zu übertragenen Teils oder der Gesamtheit des IP-Budgets vorgenommen werden. Hierzu gibt der Gebührenrechner erfindungsgemäß im Rahmen seiner Vergebührungsvorgaben zur Vergebührung eines Datenstroms einen datenstromspezifischen Gewichtungsfaktor vor. Mittels dieses Gewichtungsfaktors kann bei einer Übertragung eines Teils oder der Gesamtheit des IP-Budgets dieser Teil neu gewichtet werden, entsprechend den Vorgaben für den Datenstrom, auf den der Teil des IP-Budgets übertragen werden soll. Beispielsweise kann es einen Datenstrom "Flow 1" mit einem Budgetanteil von 10OkByte und einem Gewichtungsfaktor 1 = 10Bytes pro Unit und einen weiteren Datenstrom "Flow 2" mit einem Budgetanteil von 200kByte und einem Gewichtungsfaktor 2 = 30kByte pro Unit geben. Wenn nun das IP-Budget von "Flow 1" aufgebraucht ist, so kann die Steuerfunktion mit Hilfe der Angaben des Gebührenrechners bezüglich der unterschiedlichen Gewichtungsfaktoren aus "Flow 2" beispielsweise 30kByte entnehmen und mit einem Faktor "Gewichtungsfaktor 1/Gewichtungsfaktor 2" umrechnen bzw. multiplizieren und somit 10kByte in das IP-Budget von "Flow 1" übertragen.

Ferner gibt es auch die Möglichkeit, dass der Steuerfunktion zunächst das Gesamt-IP-Budget eines Teilnehmers zugeteilt wird und das seitens der Steuerfunktion jedem Datenstrom ein IP-Budget als Teil des Gesamt-IP-Budgets bewertet mit dem datenstromspezifischen Gewichtungsfaktor zugeteilt wird. Zu jedem Datenstrom gehört dann auch wieder eine eigene IP-Budget-Kontrolleinheit. Die Steuerfunktion kann die Höhe des jeweiligen verbleibenden Anteils des den einzelnen Datenströmen zugeteilten IP-Budgets von den einzelnen Datenströmen erfragen, gegebenenfalls zurückfordern und neu gewichtet an einen anderen Datenstrom verteilen. Somit ist eine flexible Verteilung des Gesamt-IP-Budgets unabhängig vom Gebührenrechner möglich. Bei dieser Ausführungsform existiert für jeden Datenstrom in der datenstromeigenen IP-Budget-Kontrolleinheit ein Zähler. Ein datenstromspezifisches IP-Budget wird als Teil des Gesamt-IP-Budgets gewichtet an die datenstromeigene IP-Budget-Kontrolleinheit übergeben und das auf den Zähler aufsummierte Volumen wird mit dem datenstromspezifischen IP-Budget als Teil des Gesamt-IP-Budgets regelmäßig verglichen.

In einer weiteren bevorzugten Ausführungsform des erfindungsgemäßen Verfahrens werden für die einzelnen Datenströme zusätzlich Prioritäten definiert, welche bei der Verteilung des Budgets berücksichtigt werden. So zum Beispiel kann ein Datenstrom, der für Sighalisierungsinformationen ausgezeichnet ist, mit höchster Lebensdauer, das heißt hoch priorisiert behandelt werden.

In einer weiteren bevorzugten Ausführungsform des erfindungsgemäßen Verfahrens wird das verbliebene IP-Budget eines durch ein mobiles Endgerät des Teilnehmers beendeten Datenstroms auf einen oder mehrere beliebige der verbliebenen Datenströme übertragen. Zu diesem Zweck teilt der Gebührenrechner der Steuerfunktion mit, ob und auf welchen oder welche Datenströme das verbliebene IP-Budget mit welcher Verteilung übertragen werden soll. Die Steuerfunktion kann das IP-Budget jedoch auch speichern und im Falle eines neu hinzukommenden Datenstroms das gespeicherte IP-Budget diesem neuen Datenstrom zuteilen.

In einer besonders bevorzugten Ausführungsform des erfindungsgemäßen Verfahrens wird beim Hinzukommen eines neuen Datenstroms ein Teil der existierenden Budgets auf diesem Datenstrom übertragen. Der Gebührenrechner kann zu diesem Zweck angeben, von welchen Budgets wie viel übertragen werden soll. Ebenfalls kann der Gebührenrechner zu diesem Zeitpunkt neue Gewichtungsfaktoren für die Datenströme übertragen.

In einer weiteren besonders bevorzugten Ausführungsform des erfindungsgemäßen Verfahrens fordert der Gebührenrechner beim Hinzukommen oder Wegnehmen eines Datenstroms alle existierenden IP-Budgets zurück und sendet für alle Datenströme neue IP-Budgets. Dieses ist insbesondere sinnvoll um das Gesamtbudget des Teilnehmers den neuen Gegebenheiten anzupassen. Dieses Verfahren kann auch beim Erreichen der Budgetgrenze eines der Datenströme angewendet werden. Zu diesem Zweck kann der Gebührenrechner eine Regel bezüglich des Verhaltens beim Aufbau der Layer-2 Verbindung oder zu einem beliebigen Zeitpunkt während der Verbindung an die IP Flow senden.
In einer weiteren besonders bevorzugten Ausführungsform des erfindungsgemäßen Verfahrens fordert der Gebührenrechner zu einem beliebigen Zeitpunkt während der Verbindung alle verbliebenen Budgets zurück und teilt den Datenströme neue Budgets zu.

In einer weiteren besonders bevorzugten Ausführungsform des erfindungsgemäßen Verfahrens teilt der Gebührenrechner der Steuerfunktion mit, dass beim Erreichen eines Schwellwertes eines beliebigen IP-Budgets alle verbliebenen IP-Budgets an den Gebührenrechner zu übertragen sind.

In einer weiteren besonders bevorzugten Ausführungsform des erfindungsgemäßen Verfahrens teilt der Gebührenrechner der Steuerfunktion mit, dass beim Erreichen eines Schwellwertes eines beliebigen IP-Budgets, ein Teil eines IP-Budgets oder aller anderen IP-Budgets auf das IP-Budget zu übertragen sind, welches den Schwellwert unterschritten hat.

In einer weiteren bevorzugten Ausführungsform des erfindungsgemäßen Verfahrens teilt der Gebührenrechner der Steuerfunktion mittels einer Tabelle oder einem Zeiger auf eine Position in einer Tabelle mit, wie das IP-Budget eines Datenstroms im Falle einer Parameteränderung (z.B. Qos- Änderung) dieses Datenstroms neu zu gewichten ist.

Weitere Vorteile werden anhand der folgenden Figuren aufgezeigt. Es zeigen
Fig. 1 Schematische Darstellung einer Ausführungsform des erfindungsgemäßen Verfahrens;
Fig. 2 Schematische Darstellung einer anderen Ausführungsform des erfindungsgemäßen Verfahrens;

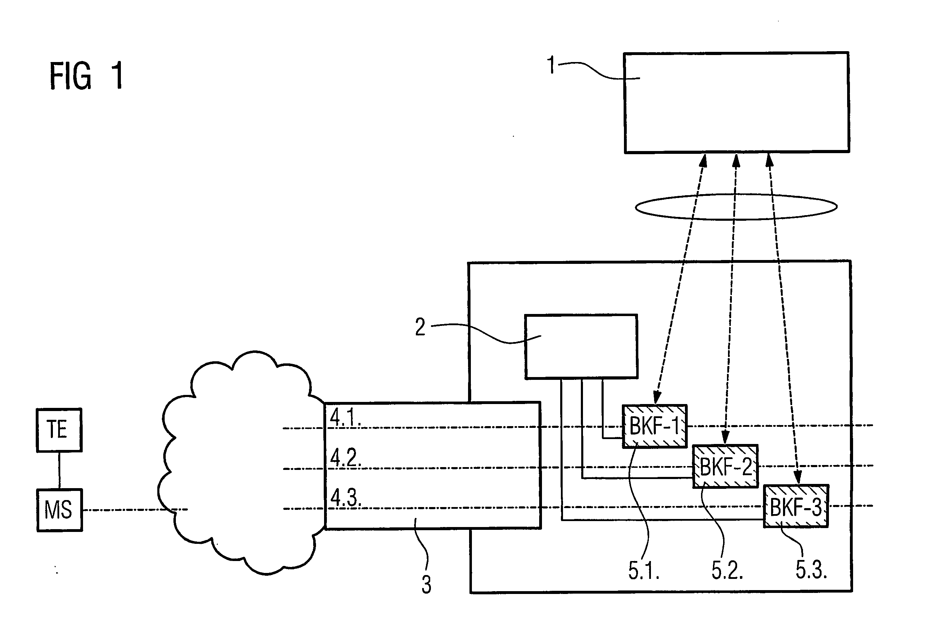

In Figur 1 ist eine Ausführungsform des erfindungsgemäßen Verfahrens schematisch dargestellt. Es sind nur die für das Verfahren wesentlichen Einheiten eines Kommunikationsnetzes gezeigt. Ein Gebührenrechner 1, eine in einem Netzknoten des Kommunikationsnetzes vorgesehene Steuerfunktion 2 sowie eine Layer 2- Verbindung 3. Für einen Teilnehmer TE wird mittels eines mobilen Endgerätes MS über ein Zugangsnetz die Layer2-Verbindung 3 in dem paketbasierten Kommunikationsnetz aufgebaut. Innerhalb der Layer 2-Verbindung 3 ist eine Mehrzahl von verschiedenen Datenströmen 4.1., 4.2. und 4.3. dargestellt. Jedem Datenstrom ist dabei ein IP-Budget 5.1., 5.2. und 5.3. jeweils mit einer entsprechenden Budget-Kontroll-Funktion BKF-1, BKF-2 und BKF-3 datenstromspezifisch entsprechend zugeordnet. Die Zuordnung der IP-Budgets 5.1., 5.2. und 5.3. erfolgt hierbei zusammen mit einer Übertragung von entsprechenden Vergebührungsvorgaben bzw. von Steuerungsinformationen zentral durch den Gebührenrechner 1. In der vorliegenden Ausführungsform des erfindungsgemäßen Verfahrens gibt der Gebührenrechner 1 der Steuerfunktion 2 eine Übertragungsbefugnis bezüglich der Übertragung von einem Teil oder der Gesamtheit des jeweiligen IP-Budgets von einem Datenstrom auf einen anderen Datenstrom, indem der Gebührenrechner 1 die Datenströme, zwischen denen eine Übertragung der jeweiligen Budgets stattfinden darf, mit einem gemeinsamen Identifier markiert - der gemeinsame Identifier ist hier durch eine entsprechende Schattierung wiedergegeben. Demnach dann die Steuerfunktion einen Teil oder die Gesamtheit des Budgets 5.3. des Datenstroms 4.3. auf den Datenstrom 4.2. übertragen; ebenso kann ein Teil oder die Gesamtheit des Budgets 5.2. des Datenstroms 4.2. auf den Datenstrom 4.3. übertragen werden. Eine Übertragung eines Teils oder der Gesamtheit der jeweiligen Budgets erfolgt dabei ohne eine Gewichtung. Das bedeutet, dass die Datenströme mit dem gleiche Identifier auf die gleiche Art und Weise vergebührt werden, ohne dass einer teuerer bzw. billiger als der andere ist. Im vorliegenden Fall heißt das, dass die Datenströme 4.2. und 4.3. gleich vergebührt werden.

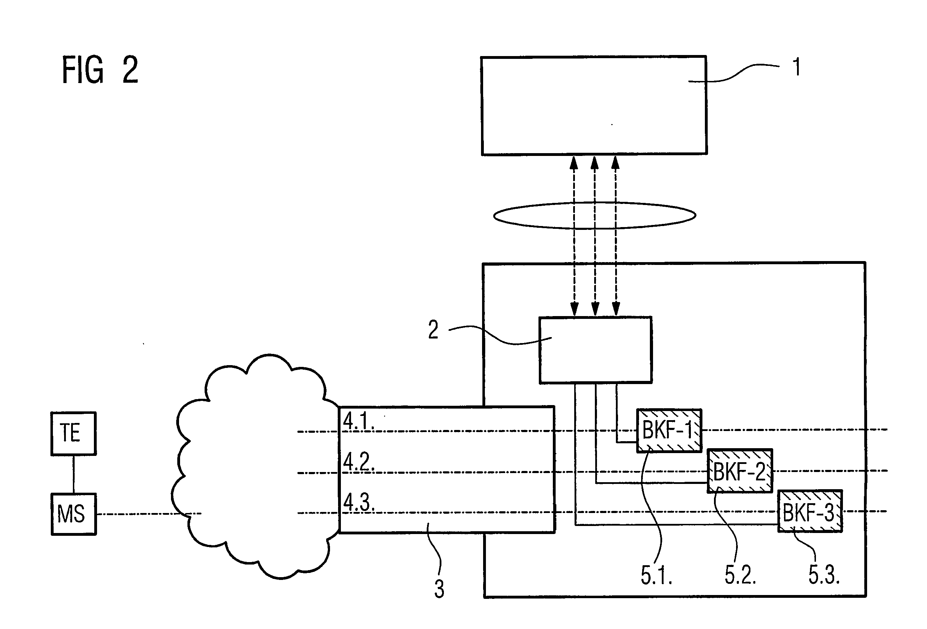

In Figur 2 ist eine andere Ausführungsform des erfindungsgemäßen Verfahrens dargestellt. Wiederum ist ein Gebührenrechner 1, eine Steuerfunktion 2 und eine Layer 2-Verbindung 3 dargestellt. Die Layer 2-Verbindung 3 enthält wiederum mehrere Datenströme 4.1. - 4.3.. Die unterschiedlichen Datenströme 4.1.-4.3. sollen dabei unterschiedlich vergebührt werden, was durch eine unterschiedliche Schattierung kenntlich gemacht ist. Jedem Datenstrom ist dabei ein IP-Budget 5.1., 5.2. und 5.3. datenstromspezifisch entsprechend zugeordnet. In diesem Fall erfolgt die Zuordnung der IP-Budgets 5.1., 5.2. und 5.3. durch die Steuerfunktion 2 nach Vergebührungsvorgaben, die der Steuerfunktion 2 durch den Gebührenrechner 1 übertragen wurden. Soll nun auch eine Übertragung eines Teils oder der Gesamtheit der jeweiligen IP-Budgets zwischen zwei unterschiedlich zu vergebührenden Datenströmen möglich sein, wie beispielsweise zwischen dem Datenstrom 4.1. und 4.2., so muss beispielsweise bei der Übertragung eines Teils des Budgets 5.1. von dem Datenstrom 4.1. auf den Datenstrom 4.2. eine Gewichtung des zu übertragenden Teils des Budgets 5.1. vorgenommen werden. Hierzu gibt der Gebührenrechner 1 der Steuerfunktion 2 einen datenstromspezifischen Gewichtungsfaktor 6.1. und einen Gewichtungsfaktor 6.2. vor. Mittels der Gewichtungsfaktoren 6.1. und 6.2. kann bei der Übertragung des Teils des Budgets 5.1. auf den Datenstrom 4.2. der Teil des Budgets 5.1. neu gewichtet werden. Besitzt beispielsweise der Datenstrom 4.1. ein Budget 5.1. von 200kByte und einen Gewichtungsfaktor 6.1.=30kByte/Unit und der Datenstrom 4.2. ein Budget 5.2. von 10OkByte mit einem Gewichtungsfaktor 6.2.=10kByte/Unit, so kann die Steuerfunktion 2 mit Hilfe der Gewichtungsfaktoren 6.1. und 6.2. von dem Datenstrom 4.1. beispielsweise 30kByte entnehmen und mit einem Umrechnungsfaktor=6.2/6.1.=1/3 umrechnen bzw. multiplizieren und somit 10kByte auf Datenstrom 4.2. übertragen.

## Patentansprüche

1. Verfahren zur Kontrolle und Steuerung mehrerer zur Verfügung stehender, dezentraler IP-Budgets eines Teilnehmers (TE) in einem paket-basierten Kommunikationsnetz bei einer Online-Vergebührung von Datenübertragungen, bei dem die mehreren zur Verfügung stehenden IP-Budgets (5.1., 5.2., 5.3.) datenstromspezifisch jeweils einem Datenstrom (4.1, 4.2, 4.3.) in einem dem Teilnehmer (TE) zuordenbaren Kontext zugeteilt werden und eine übergeordnete Steuerfunktion in einem Netzknoten des Kommunikationsnetzes vorgesehen wird, die nach Vergebührungsvorgaben von einem Gebührenrechner (1) bei einer Ressourcennutzung eines Datenstroms (4.1. , 4.2. , 4.3.) in einem dem Teilnehmer (TE) zuordenbaren Kontext das datenstromspezifische IP-Budget (5.1., 5.2., 5.3.) gemäß der Ressourcennutzung des Datenstroms (4.1. , 4.2. , 4.3.) belastet und fallbezogen eine teilweise oder vollständige Übertragung der IP-Budgets zwischen ausgewählten Datenströmen (4.1. , 4.2. , 4.3.) bewirkt,
**dadurch gekennzeichnet, dass**
die Steuerfunktion (2) eine Neuzuteilung oder Übertragung der IP-budgets (5.1., 5.2., 5.3.) nach den Vorgaben des Gebührenrechners (1) durchführt.

2. Verfahren nach Anspruch 1,
**dadurch gekennzeichnet,**
**dass** bei Hinzukommen und/oder Wegnehmen eines Datenstrom (4.1, 4.2, 9.3.)s der Gebührenrechner (1) oder die Steuerfunktion (2) nach den Vergebührungsvorgaben des Gebührenrechners alle zugeteilten IP-Budgets (5.1., 5.2., 5.3.) zurückfordert und eine neue Zuteilung der IP-Budgets (5.1., 5.2., 5.3.) durchführt.

3. Verfahren nach einem der vorhergehenden Ansprüche,
**dadurch gekennzeichnet,**
**dass** der Gebührenrechner (1) oder die Steuerfunktion (2) nach den Vergebührungsvorgaben des Gebührenrechners (1) zu einem durch den Gebührenrechner (1) vorgegebenen Zeitpunkt alle zugeteilten IP-Budgets (5.1., 5.2., 5.3.) zurückfordert und eine neue Zuteilung der IP-Budgets (5.1., 5.2., 5.3.) durchführt.

4. Verfahren nach einem der vorhergehenden Ansprüche ,
**dadurch gekennzeichnet,**
**dass** ein Teil oder die Gesamtheit des datenstromspezifischen IP-Budgets (5.1., 5.2., 5.3.) eines ersten Datenstroms (4.1, 4.2, 4.3.) durch die Steuereinheit gemäß den Vergebührungsvorgaben des Gebührenrechners (1) nur dann auf einen zweiten Datenstrom (4.1, 4.2, 4.3.) übertragen wird, wenn ein dem zweiten Datenstrom (4.1, 4.2, 4.3.) zugeordnetes datenstromspezifisches IP-Budget bis zu einem Schwellwert oder vollständig verbraucht ist.

5. Verfahren nach einem der vorhergehenden Ansprüche,
**dadurch gekennzeichnet,**
**dass** ein Teil oder die Gesamtheit des datenstromspezifischen IP-Budgets (5.1., 5.2., 5.3.) eines ersten Datenstroms (4.1, 4.2, 4.3.) durch die Steuereinheit nur dann auf einen zweiten Datenstrom (4.1, 4.2, 4.3.) übertragen wird, wenn der zweite Datenstrom (4.1, 4.2, 4.3.) zu einem Kontext gehört, der einer IP-Adresse desselben Teilnehmers zuordenbar ist.

6. Verfahren nach einem der vorhergehenden Ansprüche,
**dadurch gekennzeichnet,**
**dass** ein Teil oder die Gesamtheit des datenstromspezifischen IP-Budgets (5.1., 5.2., 5.3.) des ersten Datenstroms (4.1, 4.2, 4.3.) durch die Steuereinheit nur dann auf einen zweiten Datenstrom (4.1, 4.2, 4.3.) übertragen wird, wenn der zweite Datenstrom (4.1, 4.2, 4.3.) zu einem Kontext gehört, der derselben IP-Adresse des Teilnehmers zuordenbar ist.

7. Verfahren nach einem der vorhergehenden Ansprüche,
**dadurch gekennzeichnet,**
**dass** ein Teil oder die Gesamtheit des datenstromspezifischen IP-Budgets (5.1., 5.2., 5.3.) eines ersten Datenstroms (4.1, 4.2, 4.3.) durch die Steuereinheit nur dann auf einen zweiten Datenstrom (4.1, 4.2, 4.3.) übertragen wird, wenn der zweite Datenstrom (4.1, 4.2, 4.3.) zu demselben Kontext gehört wie der erste Datenstrom (4.1, 4.2, 4.3.).

8. Verfahren nach einem der vorhergehenden Ansprüche,
**dadurch gekennzeichnet,**
**dass** der Gebührenrechner (1) im Rahmen der Vergebührungsvorgaben eine Übertragungsbefugnis zwischen einem ersten und einem zweiten Datenstrom (4.1, 4.2, 4.3.) durch Markierung des ersten und des zweiten Datenstroms mit einem gemeinsamen Identifier gibt.

9. Verfahren nach einem der vorhergehenden Ansprüche,
**dadurch gekennzeichnet,**
**dass** seitens des Gebührenrechners (1) zur Vergebührung eines Datenstroms (4.1, 4.2, 4.3.) ein datenstromspezifischer Gewichtungsfaktor vorgegeben wird.

10. Verfahren nach Anspruch 9,
**dadurch gekennzeichnet,**
**dass** seitens des Gebührenrechners (1) zur Vergebührung eines Datenstroms mittels einer Tabelle oder eines Zeigers auf eine Position in einer Tabelle ein datenstromspezifischer Gewichtungsfaktor vorgegeben wird.

11. Verfahren nach einem der vorhergehenden Ansprüche,
**dadurch gekennzeichnet,**
**dass** als paket-basiertes Kommunikationsnetz ein GPRS-Netz verwendet wird.

12. Verfahren nach Anspruch 11,
**dadurch gekennzeichnet,**
**dass** die Steuerfunktion (2) in einem GGSN lokalisiert wird.

13. Verfahren nach einem der vorhergehenden Ansprüche,
**dadurch gekennzeichnet,**
**dass** die Steuerfunktion (2) beim Erreichen eines Schwellwertes eines datenstromspezifischen IP-Budgets (5.1., 5.2., 5.3.) eines beliebigen Datenstroms (4.1, 4.2, 4.3.) die IP-Budgets (5.1., 5.2., 5.3.) aller anderen Datenströme zurückfordert und an den Gebührenrechner (1) überträgt.

14. Verfahren nach einem der vorhergehenden Ansprüche,
**dadurch gekennzeichnet,**
**dass** ein Teil eines datenstromspezifischen IP-Budgets (5.1., 5.2., 5.3.) eines durch den Teilnehmer beendeten Datenstroms (4.1, 4.2, 4.3.) durch die Steuerfunktion (2) auf einen oder mehrere der noch bestehenden oder neu hinzugekommenen Datenströme übertragen wird.

15. Verfahren nach einem der vorhergehenden Ansprüche,
**dadurch gekennzeichnet,**
**dass** bei Hinzukommen eines neuen Datenstroms (4.1, 4.2, 4.3.) durch die Steuerfunktion (2) gemäß den Vergebührungsvorgaben des Gebührenrechners (1) zumindest ein Teil des IP-Budgets (5.1., 5.2., 5.3.) von mindestens einem existierenden Datenstroms (4.1, 4.2, 4.3.) auf den neuen Datenstrom übertragen wird.

## Claims

1. Method for monitoring and controlling a number of available decentralised IP budgets of a subscriber (TE) in a packet-based communications network during an online assessment of charges for data transmissions, in which the plurality of available IP budgets (5.1., 5.2., 5.3.) are each allocated in a data-flow-specific manner to a data flow (4.1., 4.2., 4.3.) in a context that can be assigned to the subscriber (TE), and a higher-order control function is provided in a network node of the communications network, said control function charging the data-flow-specific IP budget (5.1., 5.2., 5.3.) according to the resource utilisation of the data flow (4.1., 4.2., 4.3.) based on charge assessment specifications issued by a charge-assessing computer (1) during a resource utilisation of a data flow (4.1., 4.2., 4.3.) in a context that can be assigned to the subscriber (TE), and effecting a partial or complete transmission of the IP budget between selected data flows (4.1., 4.2., 4.3.) on a case-by-case basis,
**characterised in that**
the control function (2) reallocates or transfers the IP budgets (5.1, 5.2., 5.3.) according to the specifications of the charge-assessing computer (1).

2. Method according to claim 1,
**characterised in that**
when a data flow (4.1., 4.2., 4.3.) is added or removed, the charge assessing computer (1) or the control function (2) requests the return of all allocated IP budgets (5.1., 5.2., 5.3.) according to the charge assessment specifications of the charge-assessing computer (1) and reallocates the IP budgets (5.1., 5.2., 5.3.).

3. Method according to one of the above claims,
**characterised in that**
the charge assessing computer (1) or the control function (2) requests the return of all allocated IP budgets (5.1., 5.2., 5.3.) at a point in time specified by the charge-assessing computer (1) according to the charge assessment specifications of the charge-assessing computer (1) , and reallocates the IP budgets (5.1., 5.2., 5.3.).

4. Method according to one of the above claims,
**characterised in that**
some or all of the data-flow-specific IP budget (5.1., 5.2., 5.3.) of a first data flow (4.1., 4.2., 4.3.) is transferred by the control unit according to the charge assessment specifications of the charge assessing computer (1) to a second data flow (4.1., 4.2., 4.3.) only if a data-flow-specific IP budget allocated to the second data flow (4.1., 4.2., 4.3.) reaches a threshold value or is completely used up.

5. Method according to one of the above claims,
**characterised in that**
some or all of the data-flow-specific IP budget (5.1., 5.2., 5.3.) of a first data flow (4.1., 4.2., 4.3.) is transferred by the control unit to a second data flow (4.1., 4.2., 4.3.) only if the second data flow (4.1., 4.2., 4.3.) belongs to a context that can be allocated to an IP address of the same subscriber.

6. Method according to one of the above claims,
**characterised in that**
some or all of the data-flow-specific IP budget (5.1., 5.2., 5.3.) of the first data flow (4.1., 4.2., 4.3.) is transferred by the control unit to a second data flow (4.1., 4.2., 4.3.) only if the second data flow (4.1., 4.2., 4.3.) belongs to a context that can be allocated to the same IP address of the subscriber.

7. Method according to one of the above claims,
**characterised in that**
some or all of the data-flow-specific IP budget (5.1., 5.2., 5.3.) of a first data flow (4.1., 4.2., 4.3.) is transferred by the control unit to a second data flow (4.1., 4.2., 4.3.) only if the second data flow (4.1., 4.2., 4.3.) belongs to the same context as the first data flow (4.1., 4.2., 4.3.).

8. Method according to one of the above claims,
**characterised in that**
the charge-assessing computer (1) issues a transfer authorisation, within the charge assessment specifications, between a first and a second data flow (4.1., 4.2., 4.3.) by marking the first and the second data flow with a common identifier.

9. Method according to one of the above claims,
**characterised in that**
a data-flow-specific weighting factor is specified by the charge-assessing computer (1) for charge assessment of a data flow (4.1., 4.2., 4.3.).

10. Method according to Claim 9,
**characterised in that**
a data-flow-specific weighting factor is specified by the charge-assessing computer (1) for charge assessment of a data flow by means of a table or pointer to a position in a table.

11. Method according to one of the above claims,
**characterised in that**
a GPRS network is used as the packet-based communications network.

12. Method according to Claim 11,
**characterised in that**
the control function (2) is located in a GGSN.

13. Method according to one of the above claims,
**characterised in that**
the control function (2) requests the return of the IP budgets (5.1., 5.2., 5.3.) of all other data flows when a threshold value of a data-flow-specific IP budget (5.1., 5.2., 5.3.) of any data flow (4.1., 4.2., 4.3.) is reached, and transfers them to the charge assessing computer (1).

14. Method according to one of the above claims,
**characterised in that**
part of a data-flow-specific IP budget (5.1., 5.2., 5.3.) of a data flow (4.1., 4.2., 4.3.) terminated by the subscriber is transferred by the control function (2) to one or more existing or new data flows.

15. Method according to one of the above claims,
**characterised in that**
when a new data flow (4.1., 4.2., 4.3.) is added by the control function (2) according to the charge assessment specifications of the charge-assessing computer (1), at least part of the IP budget (5.1., 5.2., 5.3.) of at least one existing data flow (4.1., 4.2., 4.3.) is transferred to the new data flow.

## Revendications

1. Procédé pour le contrôle et la commande de plusieurs budgets IP décentralisés et disponibles d'un abonné (TE) dans un réseau de communication orienté paquet lors d'une taxation en ligne de transmissions de données, dans lequel les plusieurs budgets IP (5.1., 5.2., 5.3.) mis à disposition sont attribués chacun de façon spécifique à un flux de données (4.1., 4.2., 4.3.) dans un contexte pouvant être attribué à l'abonné (TE) et une fonction de commande prioritaire est prévue dans un noeud de réseau du réseau de communication, qui, selon des spécifications de taxation, par un calculateur de taxes (1) et lors d'une utilisation de ressources d'un flux de données (4.1., 4.2., 4.3.) dans un contexte pouvant être attribué à l'abonné (TE), grève le budget IP (5.1., 5.2., 5.3.) spécifique au flux de données selon l'utilisation des ressources du flux de données (4.1., 4.2, 4.3.) et effectue au cas par cas une transmission partielle ou complète du budget IP entre des flux de données choisis (4.1., 4.2., 4.3.),
**caractérisé en ce que**,
la fonction de commande (2) effectue une nouvelle attribution ou une transmission des budgets IP (5.1., 5.2., 5.3.) selon les spécifications du calculateur de taxes (1).

2. Procédé selon la revendication 1,
**caractérisé en ce que**,
en cas d'ajout et/ou de suppression d'un flux de données (4 . 1 . , 4.2., 4 . 3 .) , le calculateur de taxes (1) ou la fonction de commande (2) demande le remboursement de tous les budgets IP (5.1., 5.2., 5.3.) attribués selon les spécifications de taxation du calculateur de taxes et effectue une nouvelle attribution des budgets IP (5.1., 5.2., 5.3.).

3. Procédé selon l'une quelconque des revendications précédentes,
**caractérisé en ce que**,
le calculateur de taxes (1) et/ou la fonction de commande (2) demande le remboursement de tous les budgets IP attribués (5.1., 5.2., 5.3.) selon les spécifications de taxation du calculateur de taxes (1) à un moment prédéfini par le calculateur de taxes (1) et effectue une nouvelle attribution des budgets IP (5.1., 5.2., 5.3.).

4. Procédé selon l'une quelconque des revendications précédentes,
**caractérisé en ce que**,
une partie ou la totalité du budget IP (5.1., 5.2., 5.3.) spécifique au flux de données d'un premier flux de données (4.1., 4.2., 4.3.) est transmise par l'unité de commande selon les spécifications de taxation du calculateur de taxes (1) à un second flux de données (4.1., 4.2., 4.3.) uniquement dans le cas où un budget IP spécifique au flux de données, attribué au second flux de données (4.1., 4.2., 4.3.), est consommé jusqu'à une valeur seuil ou complètement.

5. Procédé selon l'une quelconque des revendications précédentes,
**caractérisé en ce que**
une partie ou la totalité du budget IP (5.1., 5.2., 5.3.) spécifique au flux de données d'un premier flux de données (4.1., 4.2., 4.3.) est transmise par l'unité de commande à un second flux de données (4.1., 4.2., 4.3.) uniquement dans le cas où le second flux de données (4.1., 4.2., 4.3.) appartient à un contexte qui peut être attribué à une adresse IP du même abonné.

6. Procédé selon l'une quelconque des revendications précédentes,
**caractérisé en ce que**
une partie ou la totalité du budget IP (5.1., 5.2., 5.3.) spécifique au flux de données du premier flux de données (4.1., 4.2., 4.3.) est transmise par l'unité de commande à un second flux de données (4.1., 4.2., 4.3.) uniquement dans les cas où le second flux de données (4.1., 4.2., 4.3.) appartient à un contexte qui peut être attribué à la même adresse IP de l'abonné.

7. Procédé selon l'une quelconque des revendications précédentes,
**caractérisé en ce que**
une partie ou la totalité des budgets IP (5.1., 5.2., 5.3.) spécifiques au flux de données d'un premier flux de données (4.1., 4.2., 4.3.) est transmise par l'unité de commande à un second flux de données (4.1., 4.2., 4.3.) uniquement dans les cas où le second flux de données (4.1., 4.2., 4.3.) appartient au même contexte que le premier flux de données (4.1., 4.2., 4.3).

8. Procédé selon l'une quelconque des revendications précédentes,
**caractérisé en ce que**,
le calculateur de taxes (1) fournit dans le cadre des spécifications de taxation une autorisation de transmission entre un premier flux de données et un second flux de données (4.1., 4.2., 4.3.) par marquage du premier et du second flux de données avec un identificateur commun.

9. Procédé selon l'une quelconque des revendications précédentes,
**caractérisé en ce que**,
le calculateur de taxes (1) prédéfinit pour la taxation d'un flux de données (4.1., 4.2., 4.3.) un facteur de pondération spécifique au flux de données.

10. Procédé selon la revendication 9,
**caractérisé en ce que**,
le calculateur de taxes (1) prédéfinit un facteur de pondération spécifique au flux de données pour la taxation d'un flux de données au moyen d'un tableau ou d'un indicateur d'une position dans un tableau.

11. Procédé selon l'une quelconque des revendications précédentes,
**caractérisé en ce que**,
un réseau GPRS est utilisé comme réseau de communication orienté paquet.

12. Procédé selon la revendication 11,
**caractérisé en ce que**
la fonction de commande (2) est localisée dans un GGSN.

13. Procédé selon l'une quelconque des revendications précédentes,
**caractérisé en ce que**,
la fonction de commande (2) demande, lorsqu'on atteint une valeur d'un budget IP (5.1., 5.2., 5.3.) spécifique au flux de données d'un flux de données (4.1., 4.2., 4.3.) quelconque, le remboursement des budgets IP (5.1., 5.2., 5.3.) de tous les autres flux de données et les transmet au calculateur de taxes (1) .

14. Procédé selon l'une quelconque des revendications précédentes,
**caractérisé en ce que**
une partie d'un budget IP (5.1., 5.2., 5.3.), spécifique au flux de données, d'un flux de données (4.1., 4.2., 4.3.) terminé par l'abonné est transmise par la fonction de commande (2) a un ou plusieurs des flux de données encore existants ou ajoutés.

15. Procédé selon l'une quelconque des revendications précédentes,
**caractérisé en ce que**,
en cas d'ajout d'un nouveau flux de données (4.1., 4.2., 4.3.), la fonction de commande (2) transmet selon les spécifications de taxation du calculateur de taxes (1) au moins une parie du budget IP (5 . 1 . , 5 . 2 . , 5.3.) d'au moins un flux de données (4.1., 4.2., 4.3.) existant au nouveau flux de données.
